# EUROPEAN PATENT SPECIFICATION

(11) **EP 3 493 596 B1**
(45) Date of publication and mention of the grant of the patent: **29.07.2020**
(21) Application number: 16912135.7
(22) Date of filing: 10.08.2016
(51) Int. Cl.: H04W 36/30, H04W 36/08, H04W 84/12

(54) **METHOD FOR AUTOMATICALLY SELECTING AND SWITCHING CHANNEL, WIRELESS ACCESS POINT AND SYSTEM**
VERFAHREN ZUR AUTOMATISCHEN AUSWAHL UND UMSCHALTUNG EINES KANALS, DRAHTLOSZUGANGSPUNKT UND SYSTEM
PROCÉDÉ DE SÉLECTION ET DE COMMUTATION AUTOMATIQUES DE CANAL, POINT D'ACCÈS SANS FIL ET SYSTÈME

(43) Date of publication of application: 05.06.2019
(73) Proprietor: Huawei Technologies Co., Ltd., Longgang District Shenzhen, Guangdong 518129 (CN)
(72) Inventor: ZHANG, Jinming, Shenzhen Guangdong 518129 (CN); ZHU, Chong, Shenzhen Guangdong 518129 (CN)
(74) Representative: Isarpatent
(86) International application number: PCT/CN2016/094411
(87) International publication number: WO 2018/027680

(56) References cited:
- WO-A1-2009/073529
- CN-A- 102 724 727
- CN-A- 104 602 312
- CN-A- 104 703 281
- US-A1- 2009 141 685
- US-A1- 2013 044 735
- PETER DELY ET AL: "CloudMAC An OpenFlow based architecture for 802.11 MAC layer processing in the cloud", 2012 IEEE GLOBECOM WORKSHOPS (GC WKSHPS 2012) : ANAHEIM, CALIFORNIA, USA, 3 - 7 DECEMBER 2012, IEEE, PISCATAWAY, NJ, 3 December 2012 (2012-12-03), pages 186-191, XP032341367, DOI: 10.1109/GLOCOMW.2012.6477567 ISBN: 978-1-4673-4942-0
- MARIA EUGENIA BEREZIN ET AL: "Multichannel Virtual Access Points for Seamless Handoffs in IEEE 802.11 Wireless Networks", VEHICULAR TECHNOLOGY CONFERENCE (VTC SPRING), 2011 IEEE 73RD, IEEE, 15 May 2011 (2011-05-15), pages 1-5, XP031896952, DOI: 10.1109/VETECS.2011.5956552 ISBN: 978-1-4244-8332-7

## Description

### TECHNICAL FIELD

The present invention relates to the communications field, and in particular, to a channel automatic selection and switching method and system, a wireless access point, and a station.

### BACKGROUND

Currently, a layer 2 in the OSI seven-layer model is a data link layer (Data Link Layer). According to IEEE 802.11, Wi-Fi mainly operates at the data link layer. The IEEE 802.11 Working Group defines a plurality of independent frequency bands, for example, 2.4 GHz and 4.9/5.8 GHz. Each frequency band is further divided into channels. For example, China's 2.4 GHz frequency band is 2.412 to 2.472 GHz, and the frequency band is further divided into 13 channels. However, as wireless access points (Access Point, AP) and stations (Station, STA) are increasing, interference between Wi-Fi is also increasing. Therefore, automatic selection of a relatively good channel becomes a mandatory function of a wireless access point.

At present, APs from some device vendors such as Qualcomm, Broadcom, and Realtek can support automatic selection of a relatively good channel, but support only automatic selection of a relatively good channel before a connection is established between an AP and a STA. After the connection is established between the AP and the STA, no AP from any vendor supports channel automatic selection and switching without interrupting a data link layer connection.

In the prior art, an AP does not detect quality of an operating channel, and a user of a STA determines quality of the operating channel. When the quality of the operating channel deteriorates and consequently data cannot be normally received or sent, the user manually interrupts the connection between the AP and the STA, then establishes a connection between the AP and the STA, and in a process of re-establishing the connection, automatically selects a relatively good channel, thereby completing channel reselection and switching. Therefore, in an operating channel switching process after the connection is established between the AP and the STA, the data link layer connection between the AP and the STA is interrupted for a period of time.

Currently, it is quite common that a new STA and other interference appear on a channel of a frequency band. Therefore, after the connection is established between the AP and the STA, channel quality deterioration inevitably occurs. Therefore, after the connection is established between the AP and the STA, how the AP performs automatic selection and switching of the operating channel without interrupting the data link layer connection becomes a problem to be urgently resolved.

Some further background technology of the present invention is disclosed in the following two documents of the prior art:
D1 PETER DELY ET AL: "CloudMAC An OpenFlow based architecture for 802.11 MAC layer processing in the cloud", 2012 IEEE GLOBECOM WORKSHOPS (GC WKSHPS 2012) : ANAHEIM, CALIFORNIA, USA, 3 - 7 DECEMBER 2012, IEEE, PISCATAWAY. N.J. 3 December 2012 (2012-12-03), pages 186-191, DOI: 10.1109/GLOCOMW.2012.6477567 ISBN: 978-1-4673-4942-0
D2 MARIA EUGENIA BEREZIN ET AL: "Multichannel Virtual Access Points for Seamless Handoffs in IEEE 802.11 Wireless Networks",

Document D1 discloses that in a functionality called CloudMac, one virtual WLAN card can be connected to several physical WLAN cards. This enables a scenario, where one WTP contains several physical cards, operating with the same MAC address, but on different channels. The physical cards periodically monitor channel utilization and provide this information to the network controller. If a station is currently using a channel with high external interference, the OpenFlow controller sends an IEEE 802.11h Channel Switch Announcement message to the station to instruct it to switch to a less used channel. The station does not experience any interruption, as it can continue to communicate on the new channel with another physical card of the same WTP. Since the station is associated with the VAP (and not the WTP), no re-association is required. This procedure does not require any modification on the client, as long as it supports IEEE 802.llh (as mandated by IEEE 802.11a/n).

Document D2 discloses Multichannel Virtual Access Points for Seamless Handoffs in IEEE 802.11 Wireless Networks and in particular the use of thresholds and the use of SSID, BSSID, encryption and key information.

### SUMMARY

The present invention provides an improved channel automatic selection and switching method and system, and a wireless access point that can perform channel automatic selection or switching without interrupting a data link layer connection after the AP establishes a connection to a STA and are directed to the special technical problem to provide that data transmission between an AP and an STA can be normally started after the operating channel of both the AP and the STA is switched to the target channel to ensure integrity of data sent between the AP and the STA. This object is solved by a channel automatic selection and switching method according to claim 1 and a wireless access point, AP, according to claim 6. Further advantageous embodiments and improvements of the invention are listed in the dependent claims. Hereinafter, some aspects of the invention which contribute to the understanding of the invention are listed below separately. However, it should be noted that the invention is defined by the attached claims and any embodiments not covered by these claims are to be understood as examples or aspects which further contribute to the understanding of the invention.

According to a first aspect, the present invention provides a channel automatic selection and switching method. The method includes: after an access point (Access Point, AP) establishes a connection to a station (Station, STA) by using an operating VAP (Virtual Access Point, VAP), performing, by the AP, quality detection on an operating channel to obtain a first quality detection result, where the operating VAP is a VAP through which the AP provides a service for the STA, and the operating channel is a channel in which the operating VAP is located; determining, by the AP based on the first quality detection result, whether the operating channel needs to be switched; if the operating channel needs to be switched, performing, by the AP, quality detection on a plurality of backup channels to obtain a plurality of second quality detection results, where the plurality of backup channels are some or all channels other than the operating channel, and the plurality of backup channels and the operating channel use same network connection information; determining, by the AP, a target channel based on the plurality of second quality detection results; sending, by the AP, a notification message to instruct the STA to perform operating channel switching, where the notification message carries the target channel; switching, by the STA, the operating channel to the target channel; and switching, by the AP, the operating channel to the target channel.

Therefore, according to the channel automatic selection and switching method provided in this aspect of the present invention, after the AP and the STA are successfully connected, the AP performs quality detection on the operating channel, and then determines, based on the quality detection result, whether the operating channel needs to be switched. If the operating channel needs to be switched, the AP performs quality detection on the backup channels, and if there is a backup channel of higher quality, channel switching for the AP and the STA is started. Because the backup channel and the operating channel use the same network connection information, when the AP and the STA perform operating channel switching, a data link layer connection interruption phenomenon does not occur, thereby ensuring that operating channel switching is completed without interrupting a data link layer connection between the AP and the STA.

With reference to the first aspect, in a first possible implementation, the method further includes: after the determining, by the AP, a target channel based on the second quality detection result and before the sending, by the AP, a notification message to instruct the STA to perform operating channel switching, suspending, by the AP, sending of data to the STA; and after the STA receives the notification message and before the switching, by the STA, the operating channel to the target channel, suspending, by the STA, sending of data to the AP.

Therefore, in the first possible implementation, before sending an operating channel switching message to the STA, the AP suspends sending of data to the STA. Before performing operating channel switching, the STA suspends sending of data to the AP. Data transmission between the AP and the STA can be normally started after the operating channel of both the AP and the STA is switched to the target channel. In this way, integrity of data sent between the AP and the STA is effectively ensured.

With reference to the first aspect or the foregoing possible implementation, in a second possible implementation, the determining, by the AP based on the first quality detection result, whether the operating channel needs to be switched includes: determining, by the AP based on a result of whether the first quality detection result meets a first switching condition, whether the operating channel needs to be switched, where that the first switching condition is met is: a value of a first parameter in the first quality detection result reaches a preset threshold of the first parameter; or a value of a first parameter in the first quality detection result reaches a preset threshold of the first parameter, a value of a second parameter reaches a preset threshold of the second parameter, and a weighted value of the first parameter and the second parameter reaches a preset threshold of the weighted value.

With reference to the first aspect or the foregoing possible implementations, in a third possible implementation, the determining, by the AP, a target channel based on the plurality of second quality detection results includes: comparing, by the AP, the plurality of second quality detection results, and selecting a channel of highest quality from the plurality of backup channels as the target channel.

With reference to the first aspect or the foregoing possible implementations, in a fourth possible implementation, the AP compares the plurality of second quality detection results with a second switching condition, and selects a channel of which the second quality detection result meets the second switching condition as the target channel, where that the second switching condition is met is: a value of a second parameter in the plurality of second quality detection results reaches a preset threshold of the second parameter; or a value of a second parameter in the second quality detection result reaches a preset threshold of the second parameter, a value of a third parameter reaches a preset threshold of the third parameter, and a weighted value of the second parameter and the third parameter reaches a preset threshold of the weighted value.

With reference to the first aspect or the foregoing possible implementations, in a fifth possible implementation, the network connection information includes a service set identifier (Service Set Identifier, SSID), a basic service set identifier (Basic Service Set Identifier, BSSID), an encryption mode, key information, state machine information, and a user equipment identifier.

With reference to the fourth possible implementation, in a sixth possible implementation, the comparing, by the AP, the plurality of second quality detection results with a second switching condition, and selecting a channel of which the second quality detection result meets the second switching condition as the target channel specifically includes: detecting, by the AP, channel quality of all backup channels to obtain a plurality of second quality detection results; randomly selecting the second quality detection result from the plurality of second quality detection results; comparing the selected second quality detection result with the second switching condition; and using a channel of which the second quality detection result meets the second switching condition as the target channel.

Therefore, in the sixth possible implementation, the AP may detect the channel quality of all the backup channels and randomly select a comparison object from the plurality of second quality detection results. When the comparison object does not meet the second switching condition, a channel corresponding to the comparison object cannot be used as the target channel and a next comparison object is selected. When the comparison object meets the second switching condition, a channel corresponding to the comparison object is determined as the target channel and it is unnecessary to select a next comparison object for comparison with the second switching condition. In this way, the target channel can be rapidly determined, and therefore operating channel switching can be rapidly completed, thereby resolving, as soon as possible, a problem caused by operating channel quality deterioration.

With reference to the fourth possible implementation, in a seventh possible implementation, the comparing, by the AP, the plurality of second quality detection results with a second switching condition, and selecting a channel of which the second quality detection result meets the second switching condition as the target channel specifically includes: selecting, by the AP, a specific backup channel, where there is no interference between the specific backup channel and the operating channel; and detecting, by the AP, channel quality of the specific backup channel to obtain a second quality detection result, and if the second quality detection result meets the second switching condition, determining the specific backup channel as the target channel.

Therefore, in the seventh possible implementation, in a relatively good case, the AP can find the target channel by performing quality detection on only one backup channel and does not need to perform quality detection on another backup channel. The target channel can be determined as soon as possible even when the AP needs to perform quality detection on the plurality of backup channels. In this way, the AP can determine the target channel more rapidly and therefore the AP can rapidly complete operating channel switching, thereby resolving, as soon as possible, a problem caused by operating channel quality deterioration.

According to a second aspect, the present invention provides an AP. The AP is configured to implement, by using hardware/software, functions of the method that are executed by the AP in the first aspect, and the hardware/software includes units corresponding to the foregoing functions.

According to a third aspect, the present invention provides a STA. The STA is configured to implement, by using hardware/software, functions of the method that are executed by the STA in the first aspect, and the hardware/software includes units corresponding to the foregoing functions.

According to a fourth aspect, the present invention provides an AP, including a processor, a network interface, a memory, and a communications bus. The communications bus is configured to implement communication between the processor, the network interface, and the memory, and the processor executes a program stored in the memory to perform the steps in the method for the AP in the first aspect.

According to a fifth aspect, the present invention provides a STA, including a processor, a network interface, a memory, and a communications bus. The communications bus is configured to implement communication between the processor, the network interface, and the memory, and the processor executes a program stored in the memory to perform the steps that are performed by the STA in the first aspect.

According to a sixth aspect, the present invention provides a system. The system includes the AP and the STA in the foregoing aspects.

According to a seventh aspect, the present invention provides a computer storage medium. The computer storage medium is configured to store a computer software instruction used by the foregoing AP, and the computer software instruction includes a program related to execution of the foregoing aspects.

According to an eighth aspect, the present invention provides a computer storage medium. The computer storage medium is configured to store a computer software instruction used by the foregoing STA, and the computer software instruction includes a program related to execution of the foregoing aspects.

In comparison with the prior art, the present invention provide a channel automatic selection and switching method and system, and a wireless access point. After the AP and the STA are successfully connected, the AP performs quality detection on the operating channel, and then determines, based on the quality detection result, whether the operating channel needs to be switched. If the operating channel needs to be switched, the AP performs quality detection on the backup channels, and if there is a backup channel of higher quality, channel switching for the AP and the STA is started. Because the backup channel and the operating channel use the same network connection information, when the AP and the STA perform operating channel switching, a data link layer connection interruption phenomenon does not occur, thereby ensuring that operating channel switching is completed without interrupting a data link layer connection between the AP and the STA.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a diagram (before channel switching) of a connection between an AP and at least one STA according to an embodiment of the present invention;
FIG. 2 is a flowchart of channel automatic selection and switching according to an embodiment of the present invention;
FIG. 3 is a diagram (after channel switching) of a connection between an AP and at least one STA according to an embodiment of the present invention;
FIG. 4 is another diagram (before channel switching) of a connection between an AP and at least one STA according to an embodiment of the present invention;
FIG. 5 is another diagram (after channel switching) of a connection between an AP and at least one STA according to an embodiment of the present invention;
FIG. 6 is another flowchart of channel automatic selection and switching according to an embodiment of the present invention;
FIG. 7 is a schematic structural diagram of an AP according to an embodiment of the present invention; and
FIG. 8 is a schematic structural diagram of a STA according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

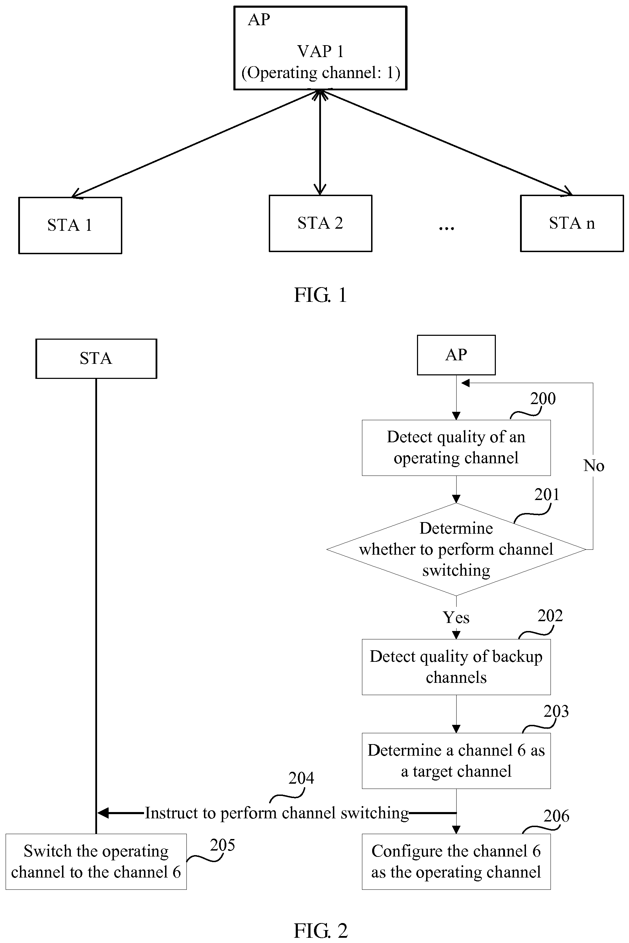

FIG. 1 is a diagram (before channel switching) of a connection between an AP and at least one STA according to an embodiment of the present invention. As shown in FIG. 1, a virtual access point (Virtual Access Point, VAP) is configured on the AP. The VAP provides a service for all STAs (STA 1, STA 2, ..., STA n, where n is greater than or equal to 1) that are connected to the AP. The AP stores network connection information of the VAP and the STA, and the network connection information is information required for establishing a connection between the VAP and the STA, including a service set identifier (Service Set Identifier, SSID), a basic service set identifier (Basic Service Set Identifier, BSSID), an encryption mode, key information, state machine information, and a user equipment identifier. FIG. 1 shows only an operating VAP and an operating channel before channel switching. For example, the operating VAP is a VAP 1, and the operating channel is a channel 1.

FIG. 2 is a flowchart of channel automatic selection and switching according to an embodiment of the present invention. As shown in FIG. 2, this embodiment of the present invention is elaborated and described for how an AP performs automatic selection and switching on an operating channel without interrupting a data link layer connection after the AP and a STA are successfully connected.

It should be noted that the AP may include a plurality of VAPs, one VAP corresponds to one channel, and network connection information the same as that of an operating VAP is configured on each VAP. These VAPs may be a plurality of logical interfaces that are virtualized by a same network interface of the AP, or may be a plurality of logical interfaces that are virtualized by a plurality of network interfaces of the AP, and the network interface may be a radio-frequency physical interface. A person skilled in the art may understand how a VAP is created, and details are not described in this embodiment of the present invention. For example, if an AP supports China's 2.4 GHz frequency band of 2.412 to 2.472 GHz and the frequency band includes 13 channels, the AP may include a VAP 1: a channel 1, a VAP 2: a channel 2, ..., a VAP 12: a channel 12, and a VAP 13: a channel 13. In a process of connecting the AP and the STA, the AP establishes a connection to the STA by using one VAP. The VAP is an operating VAP. The operating VAP is a VAP that is on the AP and that currently provides a service for the STA, and the operating channel is a channel in which the operating VAP is located. A backup VAP is a VAP that currently does not provide any service for the STA. The backup VAP may be configured before being used, or may start to be configured when needing to be used. Because all the VAPs use the same network connection information, a data link layer connection interruption phenomenon does not occur when the AP and the STA perform operating channel switching, thereby ensuring that operating channel switching is completed without interrupting the data link layer connection between the AP and the STA.

Step 200: The AP performs quality detection on the operating channel to obtain a first quality detection result.

It should be noted that the AP may perform quality detection on the operating channel in real time or periodically.

In the prior art, the AP does not detect quality of the operating channel. When the quality of the operating channel deteriorates and consequently data cannot be normally received or sent, a user manually interrupts the connection between the AP and the STA and then establishes a connection between the AP and the STA. In a process of re-establishing a connection, the AP detects quality of channels and selects a relatively good channel to connect to the STA, so as to switch the operating channel to the relatively good channel. An entire process needs the user's manual participation, and the connection between the AP and the STA is interrupted for a period of time.

The first quality detection result may include a received signal strength indicator (Received Signal Strength Indication, RSSI) of the operating channel, a packet error rate (Packet Error Rate, PER) of the operating channel, or a signal-to-noise ratio of the operating channel. The quality detection result may further include another parameter, as long as the another parameter can reflect quality of the operating channel. No specific limitation is imposed in this embodiment of the present invention.

Step 201: Determine, based on the first quality detection result, whether the operating channel needs to be switched. If the operating channel needs to be switched, step 202 is performed. If the operating channel does not need to be switched, step 200 is performed.

When determining, based on the first quality detection result, whether the operating channel needs to be switched, the AP needs to compare the first quality detection result with a first switching condition to determine whether the operating channel needs to be switched.

Specifically, when the first quality detection result meets the first switching condition, it is determined that the operating channel needs to be switched; or when the first quality detection result does not meet the first switching condition, it is determined that the operating channel does not need to be switched.

That the first switching condition is met is: a value of a first parameter in the first quality detection result reaches a preset threshold of the first parameter; or a value of a first parameter in the first quality detection result reaches a preset threshold of the first parameter, a value of a second parameter reaches a preset threshold of the second parameter, and a weighted value of the first parameter and the second parameter reaches a preset threshold of the weighted value. "First parameter" or "second parameter" herein represents any parameter in the first quality detection result, and is not limited in a quantity, and a plurality of first parameters or a plurality of second parameters may be included. How to specifically set the first switching condition is not specifically limited in this embodiment of the present invention.

It should be noted that "reaching" a preset threshold of a corresponding parameter includes being greater than or equal to the preset threshold of the corresponding parameter, being less than or equal to the preset threshold of the corresponding parameter, or the like. A specific expressed meaning needs to be limited depending on an actual parameter because some smaller parameters may indicate lower link quality, or conversely some larger parameters may indicate lower link quality, or when a value of a parameter is equal to a preset enumerated value, it indicates that a corresponding preset threshold is reached. For example, that a value of an RSSI is less than or equal to a preset threshold of the RSSI is defined as that the first switching condition is met, and in this case, it is determined that the operating channel needs to be switched. Alternatively, that a value of an RSSI is less than or equal to a preset threshold of the RSSI and a value of a PER is greater than or equal to a preset threshold of the PER is defined as that the first switching condition is met, and in this case, it is determined that the operating channel needs to be switched. Which parameters to be specifically used and how to set a preset threshold of a parameter may be set depending on an actual need of a product design, and no specific limitation is imposed in this embodiment of the present invention, as long as the setting can help identify that the operating channel needs to be switched.

It should be noted that the first switching condition may be configured on the AP at an initial networking stage or prestored before the AP is delivered.

Step 202: Perform quality detection on a plurality of backup channels to obtain a plurality of second quality detection results, where each backup channel corresponds to one second quality detection result.

It should be noted that the plurality of backup channels are some or all channels other than the operating channel, and the plurality of backup channels and the operating channel use same network connection information.

Specifically, all channels other than the operating channel may be detected, for example, quality of a channel 2, a channel 3, ..., a channel 12, and a channel 13 may be detected in sequence. All channels that absolutely have no interference to the operating channel may alternatively be detected, for example, quality of a channel 6, a channel 7, ..., a channel 12, and a channel 13 may be detected in sequence. Some channels that absolutely have no interference to the operating channel may alternatively be detected, for example, a channel 6 and a channel 13 may be detected in sequence.

Step 203: Determine a target channel based on the plurality of second quality detection results. As shown in FIG. 2, it is assumed that the channel 6 is determined as the target channel based on the plurality of second quality detection results. Herein, that the determined target channel is the channel 6 is described only as an example. A specific channel to be used as the target channel needs to be determined based on an actual detection result.

The determining a target channel based on the plurality of second quality detection results may be performed in the following manners:
Manner 1: The plurality of second quality detection results are compared, and a channel of highest quality is selected from the plurality of backup channels as the target channel. In this way, the optimal channel can be selected from the backup channels to serve the STA, thereby implementing network optimization.
Manner 2: The AP compares the plurality of second quality detection results with a second switching condition, and selects a channel of which the second quality detection result meets the second switching condition as the target channel. That the second switching condition is met is: a value of a second parameter in the plurality of second quality detection results reaches a preset threshold of the second parameter; or a value of a second parameter in the second quality detection result reaches a preset threshold of the second parameter, a value of a third parameter reaches a preset threshold of the third parameter, and a weighted value of the second parameter and the third parameter reaches a preset threshold of the weighted value. "Second parameter" or "third parameter" herein represents any parameter in the second quality detection result, and is not limited in a quantity, and a plurality of second parameters or a plurality of third parameters may be included. How to specifically set the second switching condition is not specifically limited in this embodiment of the present invention.

Specifically, the AP may determine the target channel after performing quality detection on all the backup channels. The AP may detect channel quality of all the backup channels and randomly select a comparison object from the plurality of second quality detection results. When the comparison object does not meet the second switching condition, a channel corresponding to the comparison object cannot be used as the target channel and a next comparison object is selected. When the comparison object meets the second switching condition, a channel corresponding to the comparison object is determined as the target channel. In this way, the target channel can be rapidly determined, and therefore operating channel switching can be rapidly completed, thereby resolving, as soon as possible, a problem caused by operating channel quality deterioration.

Certainly, the AP may alternatively compare all the second quality detection results with the second switching condition to obtain channels that meet the second switching condition, and then randomly select one channel from the obtained channels as the target channel or alternatively select an optimal channel from the obtained channels as the target channel.

The AP may alternatively detect channel quality of one backup channel to obtain one second quality detection result, use the second quality detection result as a comparison object, and determine whether the backup channel can be used as the target channel. Specifically, some channels that absolutely have no interference to the operating channel may be detected. For example, the operating channel is a channel 1, and the AP may detect a channel 6 and a channel 13 in sequence. After the second quality detection result is obtained through quality detection on the channel 6, whether the channel 6 meets the second switching condition is determined. If it is determined that the channel 6 meets the second switching condition, the AP may directly determine the channel 6 as the target channel. In this case, the AP performs quality detection on only one backup channel and there is no need to further perform quality detection on another backup channel. The target channel can be determined as soon as possible even when the AP needs to perform quality detection on the plurality of backup channels. In this way, the AP can determine the target channel more rapidly and therefore the AP can rapidly complete operating channel switching, thereby resolving, as soon as possible, a problem caused by operating channel quality deterioration.

It should be noted that parameters used in the two switching conditions, that is, the first switching condition and the second switching condition, in this application all are parameters in quality detection. A difference lies in that preset thresholds corresponding to the parameters are different. From the perspective of descending order of link quality, link quality when the second switching condition is met is higher than link quality when the first switching condition is met. To be specific, when the AP detects that the RSSI of the operating channel is less than R1 (the first switching condition), it indicates that a current network status is already poor, and switching of the operating channel needs to be started; otherwise, a case such as a packet loss may occur. When switching of the operating channel is started, the AP needs to detect an RSSI of a backup channel and select a channel of which an RSSI is greater than R2 (the second switching condition) as a target standby device. R2 is greater than R1.

Step 204: The AP sends a notification message to instruct the STA to perform operating channel switching, where the notification message carries the target channel (the channel 6). FIG. 2 uses only one STA as an example. If a plurality of STAs use the operating channel to perform data transmission with the AP, the AP needs to send the notification message to all the STAs that use the operating channel to perform data transmission with the AP so that all the STAs switch the operating channel to the target channel.

Optionally, a CSA Notify message in 802.11h may be used as the notification message. A specific structure of the CSA Notify message is as follows:

| | | |
|---|---|---|
| Category | Action | Channel Switch Announcement element |

"Category" occupies one byte, has a fixed value of 0, and indicates frequency spectrum management. "Action" occupies one byte, has a fixed value of 4, and indicates that this frame is CSA. "Channel Switch Announcement element" occupies five bytes, each byte is used to store one field, and byte formats and field meanings are as follows:

| | | | | |
|---|---|---|---|---|
| Element ID | Length | Channel Switch Mode | New Channel Number | Channel Switch Count |

"Length" has a fixed value of 3. "Channel Switch Mode" is set to 1, used to notify the STA that the AP is to deliver a new operating channel. "New Channel Number" is a value of the new operating channel. "Channel Switch Count" is an occasion for switching to the new channel, 0 indicates any random occasion after a CSA packet, and 1 indicates that switching is started after a fixed time period.

Step 205: The STA switches the operating channel to the target channel (the channel 6). In FIG. 2, the STA switches the operating channel to the channel 6.

The STA may complete operating channel switching based on a switching occasion specified in the CSA message. Certainly, the AP may not specify a switching occasion for the STA, and the STA itself determines when to perform operating channel switching.

Optionally, the STA may send an operating channel switching completion response message to the AP, after operating channel switching is completed. In this case, by using the response message, the AP may learn that the operating channel of the STA has been switched and a next operation may be performed, for example, step 206 is performed. If the AP has not received the response message within a preset time, the AP may resend a notification message to notify the STA of the target channel again, thereby ensuring that operating channel switching is completed for the AP and the STA.

Step 206: The AP switches the operating channel to the target channel. As shown in FIG. 2, the AP switches the detected operating channel to the channel 6. Because one VAP corresponds to one channel, since the operating channel is switched, the operating VAP is switched accordingly. The AP uses a VAP (a VAP 6) corresponding to the channel 6 to perform data transmission with the STA on the channel 6.

The AP may configure, after receiving the response message from the STA, the target channel as an operating channel that serves the STA, or may directly configure, without waiting for the response message from the STA, the target channel as an operating channel that serves the STA.

Now, operating channel switching is completed, and the AP performs data transmission with the STA on the new operating channel (the target channel). Before operating channel switching, the AP and the STA use the VAP 1 (a VAP corresponding to the channel 1) to perform data transmission by using the channel 1. After operating channel switching, the AP and the STA use the VAP 6 (a VAP corresponding to the channel 6) to perform data transmission by using the channel 6.

Therefore, according to the channel automatic selection and switching method provided in this embodiment of the present invention, after the AP and the STA are successfully connected, the AP performs quality detection on the operating channel, and then determines, based on the quality detection result, whether the operating channel needs to be switched. If the operating channel needs to be switched, the AP performs quality detection on the backup channels, and if there is a backup channel of higher quality, channel switching for the AP and the STA is started. Because the backup channel and the operating channel use the same network connection information, when the AP and the STA perform operating channel switching, a data link layer connection interruption phenomenon does not occur, thereby ensuring that operating channel switching is completed without interrupting a data link layer connection between the AP and the STA.

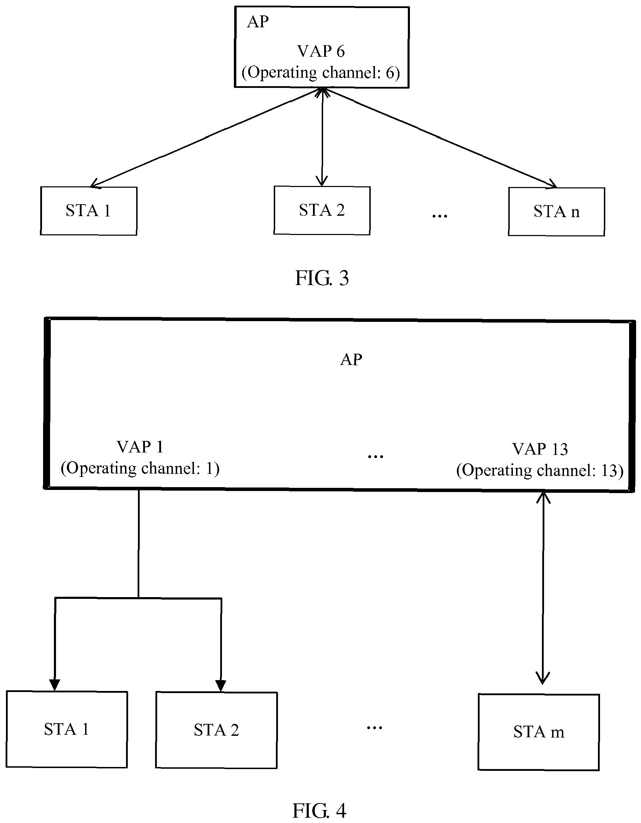

FIG. 3 is a diagram (after channel switching) of a connection between an AP and at least one STA according to an embodiment of the present invention. In FIG. 3, after the AP and the STA in FIG. 1 perform the channel automatic selection and switching procedure shown in FIG. 2, an operating VAP that is on the AP and provides a service for the STA is switched from a VAP 1 to a VAP 6, and an operating channel of the AP and the STA is switched from a channel 1 to a channel 6.

FIG. 4 is another diagram (before channel switching) of a connection between an AP and at least one STA according to an embodiment of the present invention. As shown in FIG. 4, a plurality of VAPs are configured on the AP, and one VAP may provide a service for one or more STAs. FIG. 4 shows only partial information before channel switching. For example, an operating channel of a VAP 1 is a channel 1, which means that the AP uses the VAP 1 to provide a service for a STA 1 and a STA 2 by using the channel 1. An operating channel of a VAP 13 is a channel 13, which means that the AP uses the VAP 13 to provide a service for a STA m by using the channel 13.

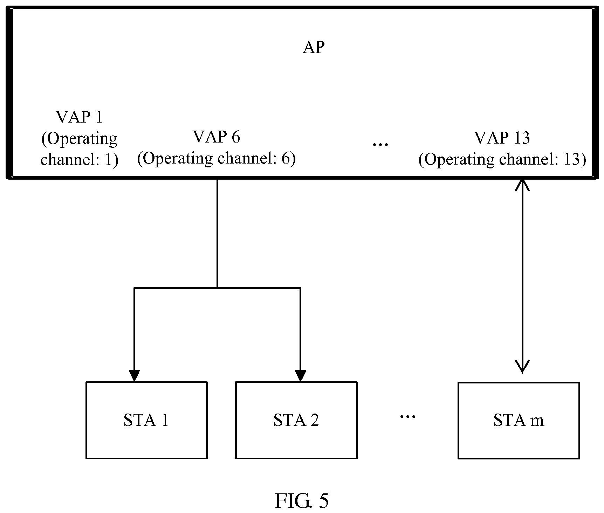

FIG. 5 is another diagram (after channel switching) of a connection between an AP and at least one STA according to an embodiment of the present invention. In this case, quality of an operating channel of a VAP 1 deteriorates, and an operating channel of a VAP 13 is normal. In FIG. 5, after the AP and the plurality of STAs in FIG. 4 perform the channel automatic selection and switching procedure shown in FIG. 2, the operating channel of the VAP 1 on the AP, a STA 1, and a STA 2 is switched from a channel 1 to a channel 6, an operating VAP is switched to a VAP 6, and an operating channel of a VAP 13 and a STA m and an operating VAP remain unchanged.

It should be noted that there may be only one operating VAP on the AP, and correspondingly, there is only one operating channel. As shown in FIG. 1, there is a VAP 1 on an AP, and in this case, the AP needs to perform quality detection on only an operating channel of the VAP 1. Alternatively, there may be a plurality of operating VAPs on the AP, and correspondingly, there are a plurality of operating channels on the AP. As shown in FIG. 3, there is a VAP 1 and a VAP 13 on an AP, and correspondingly, there are two operating channels on the AP. In this case, the AP needs to perform quality detection on an operating channel of the VAP 1 and an operating channel of the VAP 13. The method shown in FIG. 2 may be used to perform detection on both of the two operating channels.

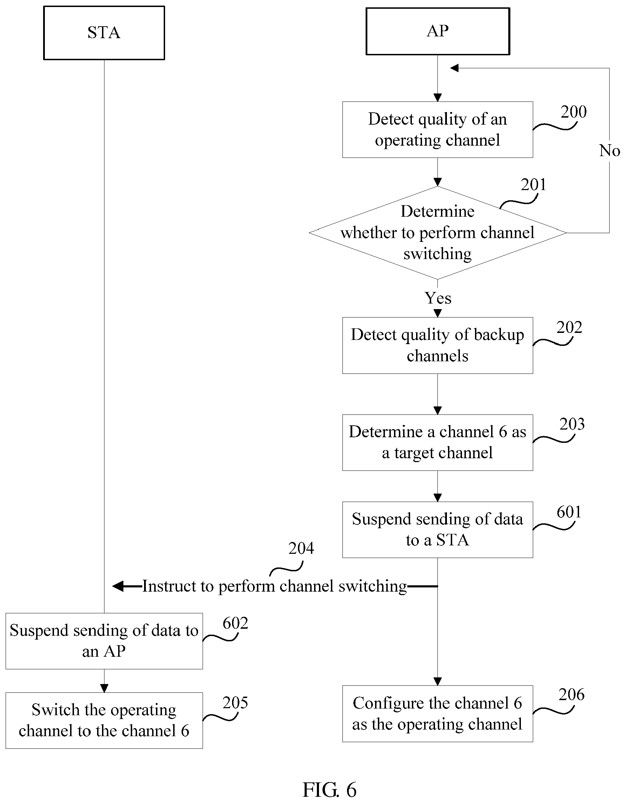

FIG. 6 is another flowchart of channel automatic selection and switching according to an embodiment of the present invention. Some modifications are made in FIG. 6 on the basis of FIG. 2. The following describes in detail only the modifications. For a same part, refer to related descriptions of FIG. 2.

After step 203 and before step 204, the method further includes:
Step 601: The AP suspends sending of data to the STA, to ensure that data sent by the AP to the STA is not lost.

After step 204 and before step 205, the method further includes:
Step 602: The STA suspends sending of data to the AP, to ensure that data sent by the STA to the AP is not lost.

Therefore, according to the channel automatic selection and switching method provided in this embodiment of the present invention, before sending an operating channel switching message to the STA, the AP suspends sending of data to the STA. Before performing operating channel switching, the STA suspends sending of data to the AP. Data transmission between the AP and the STA can be normally started after the operating channel of both the AP and the STA is switched to the target channel. In this way, integrity of data sent between the AP and the STA is effectively ensured.

According to the channel automatic selection and switching method provided in this embodiment of the present invention, channel switching prompt information may be presented on the STA to prompt a user of the STA that the AP has automatically completed channel optimization. This resolves an operating channel quality deterioration problem, thereby effectively improving AP and STA user experience. A specific prompt method may be notifying the user of the STA in a form of text on a screen of the STA, or may be notifying the user of the STA in a form of a sound. A specific manner to be used needs to be set depending on an actual need, and no specific limitation is imposed in the present invention.

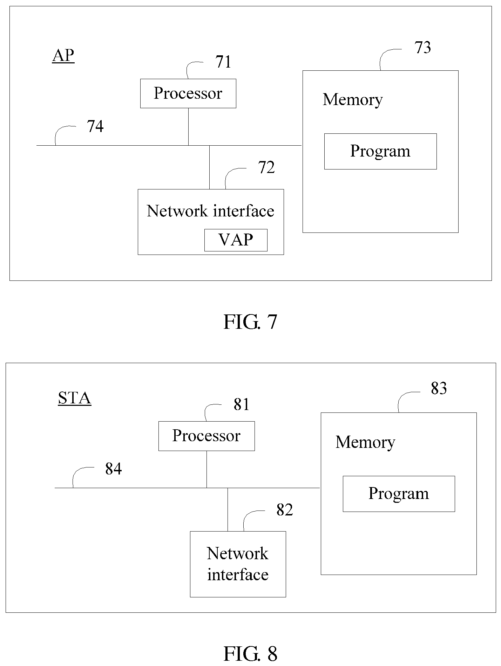

An embodiment of the present invention provides an AP. Referring to FIG. 7, FIG. 7 is a schematic structural diagram of an AP according to an embodiment of the present invention. The AP includes a processor 71, a network interface 72, a memory 73, and a communications bus 74. The communications bus 74 is configured to implement connection communication between the processor 71, the network interface 72, and the memory 73. The network interface 72 includes one or more VAPs, and the VAPs are configured to provide a service for one or more STAs. The processor 71 executes a program that is stored in the memory 73 and executed by the AP.

An embodiment of the present invention provides a STA. Referring to FIG. 8, FIG. 8 is a schematic structural diagram of a STA according to an embodiment of the present invention. The STA includes a processor 81, a network interface 82, a memory 83, and a communications bus 84. The communications bus 84 is configured to implement connection communication between the processor 81, the network interface 82, and the memory 83. The processor 81 executes a program that is stored in the memory 83 and executed by the STA.

An embodiment of the present invention provides a channel automatic selection and switching system, including the AP shown in FIG. 7 and the STA shown in FIG. 8.

In the specification, claims, and accompanying drawings of the present invention, the terms "first", "second", "third", and so on are intended to distinguish between different objects but do not indicate a particular order. It should also be understood that, the term "and/or" used herein indicates and includes any or all possible combinations of one or more associated listed items. It should be further understood that the term "include" adopted in the specification specifies presence of features, integers, steps, operations, elements and/or components, with presence or attachment of other features, integers, steps, operations, components, elements, and their combinations not excluded.

All or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a USB flash drive, a removable hard disk, a read-only memory (Read Only Memory, ROM for short), a random access memory (Random Access Memory, RAM for short), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A channel automatic selection and switching method, wherein the method comprises:
a) after an access point, AP, establishes a connection to a station, STA, by using an operating Virtual Access Point, VAP, performing (200), by the AP, quality detection on an operating channel to obtain a first quality detection result, wherein the operating VAP is a VAP through which the AP provides a service for the STA, and the operating channel is a channel in which the operating VAP is located;
b) determining (201), by the AP based on the first quality detection result, whether the operating channel needs to be switched;
c) if the operating channel needs to be switched, performing (202), by the AP, quality detection on a plurality of backup channels to obtain a plurality of second quality detection results, wherein the plurality of backup channels are some or all channels other than the operating channel, and the plurality of backup channels and the operating channel use same network connection information; and if the working channel does not need to be switched, keep performing (200), by the AP, quality detection on the operating channel;
d) determining (203), by the AP, a target channel based on the plurality of second quality detection results;
e) sending (204), by the AP, a notification message to instruct the STA to perform operating channel switching, wherein the notification message carries the target channel so that the STA switches the operating channel to the target channel; and
f) switching (205), by the AP, the operating channel to the target channel; and
g) after the determining, by the AP, a target channel based on the plurality of second quality detection result and before the sending, by the AP, a notification message to instruct the STA to perform operating channel switching, suspending (601), by the AP, sending of data to the STA.

2. The method according to claim 1, wherein the determining, by the AP based on the first quality detection result, whether the operating channel needs to be switched comprises:
determining, by the AP based on a result of whether the first quality detection result meets a first switching condition, whether the operating channel needs to be switched, wherein
that the first switching condition is met is: a value of a first parameter in the first quality detection result reaches a preset threshold of the first parameter; or a value of a first parameter in the first quality detection result reaches a preset threshold of the first parameter, a value of a second parameter reaches a preset threshold of the second parameter, and a weighted value of the first parameter and the second parameter reaches a preset threshold of the weighted value.

3. The method according to any one of claims 1 to 2, wherein the determining, by the AP, a target channel based on the plurality of second quality detection results comprises:
comparing, by the AP, the plurality of second quality detection results, and selecting a channel of highest quality from the plurality of backup channels as the target channel.

4. The method according to any one of claims 1 to 3, wherein the determining, by the AP, a target channel based on the plurality of second quality detection results comprises:
comparing, by the AP, the plurality of second quality detection results with a second switching condition; and
selecting a channel of which the second quality detection result meets the second switching condition as the target channel, wherein
that the second switching condition is met is: a value of a second parameter in the plurality of second quality detection results reaches a preset threshold of the second parameter; or a value of a second parameter in the second quality detection result reaches a preset threshold of the second parameter, a value of a third parameter reaches a preset threshold of the third parameter, and a weighted value of the second parameter and the third parameter reaches a preset threshold of the weighted value.

5. The method according to any one of claims 1 to 4, wherein
the network connection information comprises a service set identifier, SSID, a basic service set identifier, BSSID, an encryption mode, key information, state machine information, or a user equipment identifier.

6. A wireless AP, comprising a processor, a network interface, a memory, and a communications bus, wherein the communications bus is configured to implement communication between the processor, the network interface, and the memory, and the processor executes a program stored in the memory to perform the following steps:
a) after an access point, AP, establishes a connection to a station, STA, by using an operating Virtual Access Point, VAP, performing (200), by the AP, quality detection on an operating channel to obtain a first quality detection result, wherein the operating VAP is a VAP through which the AP provides a service for the STA, and the operating channel is a channel in which the operating VAP is located;
b) determining (201), based on the first quality detection result, whether the operating channel needs to be switched;
c) if the operating channel needs to be switched, performing (202) quality detection on a plurality of backup channels to obtain a plurality of second quality detection results, wherein the plurality of backup channels are some or all channels other than the operating channel, and the plurality of backup channels and the operating channel use same network connection information; and if the working channel does not need to be switched, keep performing (200), by the AP, quality detection on the operating channel;
d) determining (203) a target channel based on the plurality of second quality detection results;
e) sending (204) a notification message to instruct the STA to perform operating channel switching, wherein the notification message carries the target channel so that the STA switches the operating channel to the target channel; and
e) switching (205) the operating channel to the target channel; and
f) wherein the processor is further configured to perform the following step:
after the determining, by the AP, a target channel based on the plurality of second quality detection result and before the sending, by the AP, a notification message to instruct the STA to perform operating channel switching, suspending (601), by the AP, sending of data to the STA.

7. The wireless AP according to claim 6, wherein the step, performed by the processor, of determining, based on the first quality detection result, whether the operating channel needs to be switched specifically comprises:
determining, based on a result of whether the first quality detection result meets a first switching condition, whether the operating channel needs to be switched, wherein
that the first switching condition is met is: a value of a first parameter in the first quality detection result reaches a preset threshold of the first parameter; or a value of a first parameter in the first quality detection result reaches a preset threshold of the first parameter, a value of a second parameter reaches a preset threshold of the second parameter, and a weighted value of the first parameter and the second parameter reaches a preset threshold of the weighted value.

8. The wireless AP according to any one of claims 6 to 7, wherein the step, performed by the processor, of determining a target channel based on the plurality of second quality detection results specifically comprises:
comparing, by the AP, the plurality of second quality detection results, and selecting a channel of highest quality from the plurality of backup channels as the target channel.

9. The wireless AP according to any one of claims 6 to 8, wherein the step, performed by the processor, of determining a target channel based on the plurality of second quality detection results specifically comprises:
comparing the plurality of second quality detection results with a second switching condition; and
selecting a channel of which the second quality detection result meets the second switching condition as the target channel, wherein
that the second switching condition is met is: a value of a second parameter in the plurality of second quality detection results reaches a preset threshold of the second parameter; or a value of a second parameter in the second quality detection result reaches a preset threshold of the second parameter, a value of a third parameter reaches a preset threshold of the third parameter, and a weighted value of the second parameter and the third parameter reaches a preset threshold of the weighted value.

10. The wireless AP according to any one of claims 6 to 9, wherein
the network connection information comprises a service set identifier, SSID, a basic service set identifier, BSSID, an encryption mode, key information, state machine information, and a user equipment identifier.

11. A channel automatic selection and switching system, wherein the system comprises a STA and the wireless AP according to any one of claims 6 to 10.

## Patentansprüche

1. Verfahren zum automatischen Auswählen und Umschalten eines Kanals, wobei das Verfahren Folgendes umfasst:
a) Durchführen (200) einer Qualitätserkennung an einem Arbeitskanal durch einen Zugangspunkt AP, um ein erstes Qualitätserkennungsergebnis zu erhalten, nachdem der AP, durch Verwenden eines arbeitenden virtuellen Zugangspunkts, VAP, eine Verbindung mit einer Station, STA, hergestellt hat, wobei der arbeitende VAP ein VAP ist, durch den der AP einen Dienst für die STA bereitstellt, und der Arbeitskanal ein Kanal ist, in dem sich der arbeitende VAP befindet;
b) Bestimmen (201), ob der Arbeitskanal umgeschaltet werden muss, durch den AP, basierend auf dem ersten Qualitätserkennungsergebnis;
c) Durchführen (202) einer Qualitätserkennung an einer Vielzahl von Backup-Kanälen durch den AP, um eine Vielzahl von zweiten Qualitätserkennungsergebnissen zu erhalten, wenn der Arbeitskanal umgeschaltet werden muss, wobei die Vielzahl von Backup-Kanälen einige oder alle Kanäle außer dem Arbeitskanal sind, und die Vielzahl von Backup-Kanälen und der Arbeitskanal dieselben Netzwerkverbindungsinformationen verwenden; und weiteres Durchführen (200) der Qualitätserkennung an dem Arbeitskanal durch den AP, wenn der Arbeitskanal nicht umgeschaltet werden muss;
d) Bestimmen (203) eines Zielkanals durch den AP, basierend auf der Vielzahl von zweiten Qualitätserkennungsergebnissen;
e) Senden (204) einer Benachrichtigungsmeldung durch den AP, um die STA anzuweisen, ein Umschalten des Arbeitskanals durchzuführen, wobei die Benachrichtigungsmeldung den Zielkanal beinhaltet, damit die STA den Arbeitskanal auf den Zielkanal umschaltet; und
f) Umschalten (205) des Arbeitskanals auf den Zielkanal durch den AP; und
g) Aussetzen (601) eines Sendens von Daten an die STA durch den AP, nach dem Bestimmen eines Zielkanals durch den AP und basierend auf der Vielzahl von zweiten Qualitätserkennungsergebnissen und vor dem Senden einer Benachrichtigungsmeldung durch den AP, um die STA anzuweisen, ein Umschalten des Arbeitskanals durchzuführen.

2. Verfahren nach Anspruch 1, wobei das Bestimmen, ob der Arbeitskanal umgeschaltet werden muss, durch den AP und basierend auf dem ersten Qualitätserkennungsergebnis, Folgendes umfasst:
Bestimmen, ob der Arbeitskanal umgeschaltet werden muss, durch den AP und basierend auf einem Ergebnis, ob das erste Qualitätserkennungsergebnis eine erste Umschaltbedingung erfüllt, wobei
damit die erste Umschaltbedingung erfüllt ist, gilt: ein Wert eines ersten Parameters in dem ersten Qualitätserkennungsergebnis erreicht einen voreingestellten Schwellenwert des ersten Parameters; oder ein Wert eines ersten Parameters in dem ersten Qualitätserkennungsergebnis erreicht einen voreingestellten Schwellenwert des ersten Parameters, ein Wert eines zweiten Parameters erreicht einen voreingestellten Schwellenwert des zweiten Parameters, und ein gewichteter Wert des ersten Parameters und des zweiten Parameters erreicht einen voreingestellten Schwellenwert des gewichteten Werts.

3. Verfahren nach einem der Ansprüche 1 bis 2, wobei das Bestimmen eines Zielkanals, durch den AP und basierend auf der Vielzahl von zweiten Qualitätserkennungsergebnissen, Folgendes umfasst:
Vergleichen der Vielzahl von zweiten Qualitätserkennungsergebnissen durch den AP, und Auswählen eines Kanals höchster Qualität aus der Vielzahl von Backup-Kanälen als Zielkanal.

4. Verfahren nach einem der Ansprüche 1 bis 3, wobei das Bestimmen eines Zielkanals, durch den AP und basierend auf der Vielzahl von zweiten Qualitätserkennungsergebnissen, Folgendes umfasst:
Vergleichen der Vielzahl von zweiten Qualitätserkennungsergebnissen mit einer zweiten Umschaltbedingung durch den AP; und
Auswählen eines Kanals, bei dem das zweite Qualitätserkennungsergebnis die zweite Umschaltbedingung erfüllt, als den Zielkanal, wobei
damit die zweite Umschaltbedingung erfüllt ist, gilt: ein Wert eines zweiten Parameters in der Vielzahl von zweiten Qualitätserkennungsergebnissen erreicht einen voreingestellten Schwellenwert des zweiten Parameters; oder ein Wert eines zweiten Parameters in dem zweiten Qualitätserkennungsergebnis erreicht einen voreingestellten Schwellenwert des zweiten Parameters, ein Wert eines dritten Parameters erreicht einen voreingestellten Schwellenwert des dritten Parameters, und ein gewichteter Wert des zweiten Parameters und des dritten Parameters erreicht einen voreingestellten Schwellenwert des gewichteten Werts.

5. Verfahren nach einem der Ansprüche 1 bis 4, wobei die Netzwerkverbindungsinformationen eine Diensteinstellungskennung, SSID, eine Basisdiensteinstellungskennung, BSSID, einen Verschlüsselungsmodus, Schlüsselinformationen, Zustandsmaschineninformationen oder eine Nutzerausrüstungskennung umfassen.

6. Drahtloser AP, einen Prozessor, eine Netzwerkschnittstelle, einen Speicher und einen Kommunikationsbus umfassend, wobei der Kommunikationsbus dazu konfiguriert ist, eine Kommunikation zwischen dem Prozessor, der Netzwerkschnittstelle und dem Speicher zu implementieren, und wobei der Prozessor ein Programm ausführt, das in dem Speicher abgespeichert ist, um folgende Schritte durchzuführen:
a) Durchführen (200) einer Qualitätserkennung an einem Arbeitskanal durch einen Zugangspunkt, AP, um ein erstes Qualitätserkennungsergebnis zu erhalten, nachdem der AP durch Verwenden eines arbeitenden virtuellen Zugangspunkts, VAP, eine Verbindung mit einer Station, STA, hergestellt hat, wobei der arbeitende VAP ein VAP ist, durch den der AP einen Dienst für die STA bereitstellt, und der Arbeitskanal ein Kanals ist, in dem sich der arbeitende VAP befindet;
b) Bestimmen (201), ob der Arbeitskanal umgeschaltet werden muss, basierend auf dem ersten Qualitätserkennungsergebnis;
c) Durchführen (202) einer Qualitätserkennung an einer Vielzahl von Backup-Kanälen, um eine Vielzahl von zweiten Qualitätserkennungsergebnissen zu erhalten, wenn der Arbeitskanal umgeschaltet werden muss, wobei die Vielzahl von Backup-Kanälen einige oder alle Kanäle außer dem Arbeitskanal sind, und die Vielzahl von Backup-Kanälen und der Arbeitskanal dieselben Netzwerkverbindungsinformationen verwenden; und weiteres Durchführen (200) der Qualitätserkennung an dem Arbeitskanal durch den AP, wenn der Arbeitskanal nicht umgeschaltet werden muss;
d) Bestimmen (203) eines Zielkanals, basierend auf der Vielzahl von zweiten Qualitätserkennungsergebnissen;
e) Senden (204) einer Benachrichtigungsmitteilung, um die STA anzuweisen, ein Umschalten des Arbeitskanals durchzuführen, wobei die Benachrichtigungsmitteilung den Zielkanal beinhaltet, sodass die STA den Arbeitskanal auf den Zielkanal umschaltet; und
f) Umschalten (205) des Arbeitskanals auf den Zielkanal; und
g) wobei der Prozessor ferner dazu konfiguriert ist, den folgenden Schritt durchzuführen:
Aussetzen (601) eines Sendens von Daten an die STA durch den AP, nach dem Bestimmen eines Zielkanals durch den AP und basierend auf der Vielzahl von zweiten Qualitätserkennungsergebnissen und vor dem Senden einer Benachrichtigungsmitteilung durch den AP, um die STA anzuweisen, ein Umschalten des Arbeitskanals durchzuführen.

7. Drahtloser AP nach Anspruch 6, wobei der Schritt des Bestimmens, durchgeführt von dem Prozessor und basierend auf dem ersten Qualitätserkennungsergebnis, ob der Arbeitskanal umgeschaltet werden muss, speziell Folgendes umfasst:
Bestimmen, ob der Arbeitskanal umgeschaltet werden muss, basierend auf einem Ergebnis, ob das erste Qualitätserkennungsergebnis eine erste Umschaltbedingung erfüllt, wobei
damit die erste Umschaltbedingung erfüllt ist, gilt: ein Wert eines ersten Parameters in dem ersten Qualitätserkennungsergebnis erreicht einen voreingestellten Schwellenwert des ersten Parameters; oder ein Wert eines ersten Parameters in dem ersten Qualitätserkennungsergebnis erreicht einen voreingestellten Schwellenwert des ersten Parameters, ein Wert eines zweiten Parameters erreicht einen voreingestellten Schwellenwert des zweiten Parameters, und ein gewichteter Wert des ersten Parameters und des zweiten Parameters erreicht einen voreingestellten Schwellenwert des gewichteten Werts.

8. Drahtloser AP nach einem der Ansprüche 6 bis 7, wobei der Schritt des Bestimmens eines Zielkanals, durchgeführt von dem Prozessor und basierend auf der Vielzahl von zweiten Qualitätserkennungsergebnissen, speziell Folgendes umfasst:
Vergleichen der Vielzahl von zweiten Qualitätserkennungsergebnissen durch den AP, und Auswählen eines Kanals höchster Qualität aus der Vielzahl von Backup-Kanälen als dem Zielkanal.

9. Drahtloser AP nach einem der Ansprüche 6 bis 8, wobei der Schritt des Bestimmens eines Zielkanals, durchgeführt von dem Prozessor und basierend auf der Vielzahl von zweiten Qualitätserkennungsergebnissen, speziell Folgendes umfasst:
Vergleichen der Vielzahl von zweiten Qualitätserkennungsergebnissen mit einer zweiten Umschaltbedingung; und
Auswählen eines Kanals, bei dem das zweite Qualitätserkennungsergebnis die zweite Umschaltbedingung erfüllt, als den Zielkanal, wobei
damit die zweite Umschaltbedingung erfüllt ist, gilt: ein Wert eines zweiten Parameters in der Vielzahl von zweiten Qualitätserkennungsergebnissen erreicht einen voreingestellten Schwellenwert des zweiten Parameters; oder ein Wert eines zweiten Parameters in dem zweiten Qualitätserkennungsergebnis erreicht einen voreingestellten Schwellenwert des zweiten Parameters, ein Wert eines dritten Parameters erreicht einen voreingestellten Schwellenwert des dritten Parameters, und ein gewichteter Wert des zweiten Parameters und des dritten Parameters erreicht einen voreingestellten Schwellenwert des gewichteten Werts.

10. Drahtloser AP nach einem der Ansprüche 6 bis 9, wobei die Netzwerkverbindungsinformationen eine Diensteinstellungskennung, SSID, eine Basisdiensteinstellungskennung, BSSID, einen Verschlüsselungsmodus, SchlüsselInformationen, Zustandsmaschineninformationen und eine Nutzerausrüstungskennung umfassen.

11. System zum automatischen Auswählen und Umschalten eines Kanals, wobei das System eine STA und den drahtlosen AP nach einem der Ansprüche 6 bis 10 umfasst.

## Revendications

1. Procédé de sélection et de commutation automatiques de canal, dans lequel le procédé comprend :
a) après qu'un point d'accès, AP, a établi une connexion à une station, STA, en utilisant un point d'accès virtuel, VAP, actif, la mise en œuvre (200), par l'AP, d'une détection de qualité sur un canal actif pour obtenir un premier résultat de détection de qualité, dans lequel le VAP actif est un VAP par le biais duquel l'AP fournit un service à la STA, et le canal actif est un canal dans lequel le VAP actif est situé ;
b) le fait de déterminer (201), par l'AP sur la base du premier résultat de détection de qualité, si le canal actif a besoin d'être commuté ;
c) si le canal actif a besoin d'être commuté, la mise en œuvre (202), par l'AP, d'une détection de qualité sur une pluralité de canaux de réserve pour obtenir une pluralité de seconds résultats de détection de qualité, dans lequel la pluralité de canaux de réserve sont certains ou tous les canaux autres que le canal actif, et la pluralité de canaux de réserve et le canal actif utilisent les mêmes informations de connexion au réseau ; et si le canal de trafic n'a pas besoin d'être commuté, la poursuite de la mise en œuvre (200), par l'AP, d'une détection de qualité sur le canal actif ;
d) la détermination (203), par l'AP, d'un canal cible sur la base de la pluralité de seconds résultats de détection de qualité ;
e) l'envoi (204), par l'AP, d'un message de notification pour donner l'ordre à la STA de mettre en œuvre une commutation de canal actif, dans lequel le message de notification porte le canal cible de sorte que la STA commute le canal actif vers le canal cible ; et
f) la commutation (205), par l'AP, du canal actif vers le canal cible ; et
g) après la détermination, par l'AP, d'un canal cible sur la base de la pluralité de seconds résultats de détection de qualité et avant l'envoi, par l'AP, d'un message de notification pour donner l'ordre à la STA de mettre en œuvre une commutation de canal actif, la suspension (601), par l'AP, de l'envoi de données à la STA.

2. Procédé selon la revendication 1, dans lequel le fait de déterminer, par l'AP sur la base du premier résultat de détection de qualité, si le canal actif a besoin d'être commuté comprend :
le fait de déterminer, par l'AP sur la base d'un résultat de si le premier résultat de détection de qualité remplit une première condition de commutation, si le canal actif a besoin d'être commuté, dans lequel
le fait que la première condition de commutation soit remplie est : une valeur d'un premier paramètre dans le premier résultat de détection de qualité atteint un seuil prédéfini du premier paramètre ; ou une valeur d'un premier paramètre dans le premier résultat de détection de qualité atteint un seuil prédéfini du premier paramètre, une valeur d'un second paramètre atteint un seuil prédéfini du second paramètre, et une valeur pondérée du premier paramètre et du second paramètre atteint un seuil prédéfini de la valeur pondérée.

3. Procédé selon l'une quelconque des revendications 1 ou 2, dans lequel la détermination, par l'AP, d'un canal cible sur la base de la pluralité de seconds résultats de détection de qualité comprend :
la comparaison, par l'AP, de la pluralité de seconds résultats de détection de qualité, et la sélection d'un canal de la plus grande qualité à partir de la pluralité de canaux de réserve en tant que canal cible.

4. Procédé selon l'une quelconque des revendications 1 à 3, dans lequel la détermination, par l'AP, d'un canal cible sur la base de la pluralité de seconds résultats de détection de qualité comprend :
la comparaison, par l'AP, de la pluralité de seconds résultats de détection de qualité à une seconde condition de commutation ; et
la sélection d'un canal dont le second résultat de détection de qualité remplit la seconde condition de commutation en tant que canal cible, dans lequel
le fait que la seconde condition de commutation soit remplie est : une valeur d'un deuxième paramètre dans la pluralité de seconds résultats de détection de qualité atteint un seuil prédéfini du deuxième paramètre ; ou une valeur d'un deuxième paramètre dans le second résultat de détection de qualité atteint un seuil prédéfini du deuxième paramètre, une valeur d'un troisième paramètre atteint un seuil prédéfini du troisième paramètre, et une valeur pondérée du deuxième paramètre et du troisième paramètre atteint un seuil prédéfini de la valeur pondérée.

5. Procédé selon l'une quelconque des revendications 1 à 4, dans lequel
les informations de connexion au réseau comprennent un identifiant de l'ensemble de services, SSID, un identifiant de l'ensemble de services de base, BSSID, un mode de chiffrement, des informations de clé, des informations de machine à états, ou un identifiant d'équipement utilisateur.

6. AP sans fil, comprenant un processeur, une interface réseau, une mémoire et un bus de communications, dans lequel le bus de communications est conçu pour mettre en œuvre une communication entre le processeur, l'interface réseau et la mémoire, et le processeur exécute un programme stocké dans la mémoire pour mettre en œuvre les étapes suivantes :
a) après qu'un point d'accès, AP, a établi une connexion à une station, STA, en utilisant un point d'accès virtuel, VAP, actif, la mise en œuvre (200), par l'AP, d'une détection de qualité sur un canal actif pour obtenir un premier résultat de détection de qualité, dans lequel le VAP actif est un VAP par le biais duquel l'AP fournit un service à la STA, et le canal actif est un canal dans lequel le VAP actif est situé ;
b) le fait de déterminer (201), sur la base du premier résultat de détection de qualité, si le canal actif a besoin d'être commuté ;
c) si le canal actif a besoin d'être commuté, la mise en œuvre (202) d'une détection de qualité sur une pluralité de canaux de réserve pour obtenir une pluralité de seconds résultats de détection de qualité, dans lequel la pluralité de canaux de réserve sont certains ou tous les canaux autres que le canal actif, et la pluralité de canaux de réserve et le canal actif utilisent les mêmes informations de connexion au réseau ; et si le canal de trafic n'a pas besoin d'être commuté, la poursuite de la mise en œuvre (200), par l'AP, d'une détection de qualité sur le canal actif ;
d) la détermination (203) d'un canal cible sur la base de la pluralité de seconds résultats de détection de qualité ;
e) l'envoi (204) d'un message de notification pour donner l'ordre à la STA de mettre en œuvre une commutation de canal actif, dans lequel le message de notification porte le canal cible de sorte que la STA commute le canal actif vers le canal cible ; et
f) la commutation (205) du canal actif vers le canal cible ; et
g) dans lequel le processeur est en outre conçu pour mettre en œuvre l'étape suivante :
après la détermination, par l'AP, d'un canal cible sur la base de la pluralité de seconds résultats de détection de qualité et avant l'envoi, par l'AP, d'un message de notification pour donner l'ordre à la STA de mettre en œuvre une commutation de canal actif, la suspension (601), par l'AP, de l'envoi de données à la STA.

7. AP sans fil selon la revendication 6, dans lequel l'étape, mise en œuvre par le processeur, consistant à déterminer, sur la base du premier résultat de détection de qualité, si le canal actif a besoin d'être commuté comprend en particulier :
le fait de déterminer, sur la base d'un résultat de si le premier résultat de détection de qualité remplit une première condition de commutation, si le canal actif a besoin d'être commuté, dans lequel
le fait que la première condition de commutation soit remplie est : une valeur d'un premier paramètre dans le premier résultat de détection de qualité atteint un seuil prédéfini du premier paramètre ; ou une valeur d'un premier paramètre dans le premier résultat de détection de qualité atteint un seuil prédéfini du premier paramètre, une valeur d'un second paramètre atteint un seuil prédéfini du second paramètre, et une valeur pondérée du premier paramètre et du second paramètre atteint un seuil prédéfini de la valeur pondérée.

8. AP sans fil selon l'une quelconque des revendications 6 ou 7, dans lequel l'étape, mise en œuvre par le processeur, consistant à déterminer un canal cible sur la base de la pluralité de seconds résultats de détection de qualité comprend en particulier :
la comparaison, par l'AP, de la pluralité de seconds résultats de détection de qualité, et la sélection d'un canal de la plus grande qualité à partir de la pluralité de canaux de réserve en tant que canal cible.

9. AP sans fil selon l'une quelconque des revendications 6 à 8, dans lequel l'étape, mise en œuvre par le processeur, consistant à déterminer un canal cible sur la base de la pluralité de seconds résultats de détection de qualité comprend en particulier :
la comparaison de la pluralité de seconds résultats de détection de qualité à une seconde condition de commutation ; et
la sélection d'un canal dont le second résultat de détection de qualité remplit la seconde condition de commutation en tant que canal cible, dans lequel
le fait que la seconde condition de commutation soit remplie est : une valeur d'un deuxième paramètre dans la pluralité de seconds résultats de détection de qualité atteint un seuil prédéfini du deuxième paramètre ; ou une valeur d'un deuxième paramètre dans le second résultat de détection de qualité atteint un seuil prédéfini du deuxième paramètre, une valeur d'un troisième paramètre atteint un seuil prédéfini du troisième paramètre, et une valeur pondérée du deuxième paramètre et du troisième paramètre atteint un seuil prédéfini de la valeur pondérée.

10. AP sans fil selon l'une quelconque des revendications 6 à 9, dans lequel
les informations de connexion au réseau comprennent un identifiant de l'ensemble de services, SSID, un identifiant de l'ensemble de services de base, BSSID, un mode de chiffrement, des informations de clé, des informations de machine à états, et un identifiant d'équipement utilisateur.

11. Système de sélection et de commutation automatiques de canal, dans lequel le système comprend une STA et l'AP sans fil selon l'une quelconque des revendications 6 à 10.
